# EUROPEAN PATENT APPLICATION

(11) **EP 2 243 594 A1**
(43) Date of publication of application: **27.10.2010**
(21) Application number: 09468007.1
(22) Date of filing: 23.10.2009
(51) Int. Cl.: B24C 1/04, G01J 5/00, G01N 3/56

(54) **Arrangement of devices and a method for empirically determining efficiency index in abrasive waterjet cutting and application thereof in a device for simultaneous control of abrasive waterjet cutting**

(30) Priority: 20.04.2009 SI 200900110; 17.09.2009 SI 200900250
(71) Applicant: Univerza v Ljubljani, 1000 Ljubljana (SI)
(72) Inventor: Cvjeticanin, Mladen, 1000 Ljubljana (SI); Lebar, Andrej, 4290 Trzic (SI); Orbanic, Henri, 1000 Ljubljana (SI); Junkar, Mihael, 6330 Piran (SI); Poredos, Alojz, 1262 Dol Pri Ljubljani (SI)
(74) Representative: Golmajer Zima, Marjanca

(57) **Abstract**

An arrangement of devices for determining an efficiency index in abrasive waterjet cutting, i.e. the index unambiguously defining for a certain material the shape of a cut, roughness of surfaces created by cutting, their conical nature depending on the incidence angle of the abrasive waterjet. The arrangement of the invention consists of a known abrasive waterjet cutting machine **(1),** a thermographic camera **(2)** and a computer **(3),** wherein a workpiece **(4)** is arranged on said machine **(1),** said workpiece being intended to undergo a cutting procedure; and fixed and variable process parameters **(A)** of cutting are known: hydraulic, cutting, mixing, abrasive and input parameters of said workpiece. Said thermographic camera **(2)** is positioned in a way to record in front view the entire front surface **(5)** of a cut in the workpiece **(4)** in a known time interval, **in that** an adequate programme within said computer **(3)** allocates to each thermographic image **(6)** cutting parameters **(A)** that were valid for each point **(B)** of cutting and finally shows them in the form of a table or chart of a relationship between the efficiency index and one of the parameters **(A).**

## Description

### Subject of Invention

The subject of the present invention is an arrangement of devices and a method for determining an efficiency index in abrasive waterjet cutting, i.e. the index unambiguously defining for a certain material the shape of a cut, roughness of surfaces created by cutting, their conical nature depending on the incidence angle of the abrasive waterjet and application thereof in a device for simultaneous control of abrasive waterjet cutting.

### Technical Problem

The technical problem solved by the present invention is how to design such arrangement of devices that would provide a cutting efficiency index for a known material based on a cutting experiment in order to use this index to define cutting parameters of the same material in industrial application of cutting of this type, wherein a method for determining said index should be adapted to said arrangement and that said arrangement would render it possible to be applied into a device for simultaneous control of waterjet cutting that would enable immediate correct cutting without preliminary tests on a workpiece with respect to a selected type of cutting:
a) as quick cutting as possible, yet less precise; or
b) precise, yet slower.

### Prior Art

When a method of abrasive waterjet cutting is used in industry, test cutting of identical or equal material should be performed first, in order to attain the desired type of cutting with respect to the anticipated quality of the cut-off part (shape of the cutting surface and its inclination, precise dimensions of a workpiece) as a function of cutting speed. All this contributes to an economic optimum of a selected method. Preliminary tests in industry are time consuming and cause scrap, which represents an additional cost.

Therefore there is a need for the industry to obtain an unambiguously defined efficiency index for a specific type of material for the field of application of this type of cutting by means of a special device or an arrangement or a procedure. This index would be a basis to determine parameters for industrial cutting devices that would yield an anticipated result with respect to the selected parameters (shape of cutting surfaces and dimension tolerance of a workpiece under consideration of cutting speed) for an optimum cutting procedure. It is considerably cheaper and of a much better quality if this index is determined for each material on one spot foreseen for tests of this type and then available to each user of such material. The implementation of a testing spot and distribution of each efficiency index are not the subject of the present invention.

Various values measured at different locations in a cutting procedure of this type have been used as a kind of efficiency index.

It is a know fact that sound emission within a cutting head was linked to the properties of the surface resulting from cutting. Further, the abrasive waterjet was optically monitored in the area between the nozzle and the workpiece. The geometry of the nozzle changes with use and consequently the shape of the jet changes as well, which contributes to cutting properties. A further property that was measured and to which the quality of cutting was linked is temperature within the nozzle. As the nozzle is worn out, its temperature increases during operation. The quantity of suctioned air into the nozzle was measured as well. There is a relation between the wear of the nozzle and a negative change in the shape of the waterjet, owing to which cutting is much worse, i.e. the cutting surface is less smooth and dimensions are imprecise.

A further known method is a method of measuring density of abrasive particles in a waterjet by means of added magnetic particles having the same density as the abrasive particles. The properties of the waterjet were measured by a focular speedometer with two lasers.

A high speed camera and a double laser beam have been used as well to measure and monitor the visible jet with abrasive particles.

The use of a thermographic camera for the monitoring of temperature of individual points on the cutting part of a workpiece during cutting is also known.

Further, two methods of operating abrasive waterjet cutting are also known US 6,021,682 (Jiyue Zeng) and US 6,244,927 (Jiyue Zeng).

All the mentioned processes of monitoring and measuring abrasive waterjet cutting performed during an industrial cutting process or outside this process as tests are characterised by the fact that individual measuring results are implemented as comparative data and for this reason corrections are needed as the process advances in order to reach the desired cutting property. An initial scrap of products can be anticipated, which is not desired. Moreover, each device including an industrially applicable cutting device of this type must comprise all measuring and control instruments, which extends the time of preparation of the device for series production and increases the costs per hour. In order to achieve a quality result in this type of cutting, a highly trained operator of the device is needed. All the above stated conditions are a drawback for industrial, i.e. series application, which results in high price and/or poor quality of the cut, in short, in the service being uncompetitive.

So there is a need for a new way of monitoring, measuring and even evaluating the property of cutting by abrasive waterjet cutting, so that the above indicated disadvantages are eliminated in industrial application.

Moreover, several devices are known that are adaptable to a waterjet cutting device and simultaneously measure various parameters typical of cutting of this type. Preliminary tests can show a correlation between a selected parameter and the quality of cutting. An adequate device uses its sensor to detect changes in the selected parameter during cutting and automatically controls one of the cutting parameters: water pressure, advancement of a workpiece, removal of a cutting nozzle from a workpiece and the like. The purpose of detecting changes is to reach a constant and desired cut in the sense of quality of the cut with anticipated roughness and precision, which is dictated by the aspect of economy and technology.

According to patent US 6,021,682 it is measured by means of a pressure chamber that measures the change in pressure of a waterjet in the area between a cutting head and a workpiece. The change is taken into account by the control unit in determining the speed of advancement of the workpiece during cutting for a selected quality of cutting. Such method encounters problems in an uneven or stepped surface adjacent to the cutting nozzle, since it is very difficult to ensure unchanged conditions of tightness that also have influence on the waterjet pressure.

According to patent US 6,244,927 the above problem is done away with by measuring pressure of the waterjet in the cutting head. The pressure in the cutting head depends on its distance to the surface of the workpiece and its thickness in the area of current cutting. Pressure significantly changes in the initial situation of cutting, when piercing of the waterjet through material is effected. Control of such device is effected on the basis of comparison with reference pressure that the cutting device should provide for during the entire period of cutting. Such device is adequate for large series cutting of workpieces having constant thickness that determines the constant reference pressure. In other cases too considerable deviations are encountered and manual correction is needed. A question of cost efficiency of such procedure arises in small series cutting or even in the cutting of individual workpieces.

According to patent US 5,854,744 underpressure within a tube for the supply of abrasive granules to the waterjet is monitored. This pressure is influenced by individual situations of cutting. The shape of the workpiece does not have any influence in this process, yet the reference pressure is not constant in a workpiece that changes in dimensions and material. This method is therefore not generally applicable.

There is a need for such abrasive waterjet cutting device and process that could simultaneously be applicable in cutting series workpieces but also individual ones, in cutting materially homogeneous workpieces and even workpieces composed of several materials. Cutting of unique workpieces is especially problematic, since they need to be cut precisely, and what's more, such workpiece has been machined earlier by other methods and is composed of such material that its price prior to processing by this process is that high that scrap would be unjustified. Moreover, there are instances, in which no errors in cutting whatsoever can be tolerated at all.

Apart from the above reasons the price of cutting is very important, especially in series workpieces. The price of cutting is influenced by the exploitation of the cutting machine, with which the actual depreciation cost of the machine can be calculated and this is a constituent part of the price of the machine per hour. If actual use of a machine of this type is to be planned, the times of preparation and the times of actual cutting for an individual product need to be known in advance. An unexpected time for the preparation of cutting or for corrections and even replacement of scrap brings too many unknowns for such planning. A need for such device and a method for the control of an abrasive waterjet cutting device that would provide for the above-mentioned matters is obvious.

### Solution to the Technical Problem

The described technical problem is solved by a new arrangement of devices for determining an efficiency index in abrasive waterjet cutting, which is characterised by the use of a thermographic camera directly recording temperature on the entire front surface of a cut on a workpiece continuously during cutting procedure. Based on a proved fact, namely that each highest temperature point is measured in the current point of cutting, cutting parameters for a selected shape of cut and the speed of cutting can be defined by taking the cutting speed into consideration and represented in the form of a chart. This approach based on the device of the invention makes it possible for a certain organisation to set the efficiency index in cutting only once and to forward it to all users of such cutting devices, who can use this chart and a previously selected shape of cut to set the parameters on the cutting machine. This results in no scrap upon a start-up of each series cutting, in a considerable shorter time of preparation of series cutting and in higher cutting quality. And what's more such procedure can be performed even by a less skilled operator.

An essential characteristic of the integration of said arrangement of devices into a device for continuous abrasive waterjet cutting lies in that it is construed with a video camera that monitors the shape of the cut during cutting and based on its shape and on a previously selected criterion for quality or cutting speed a microprocessor regulates the selected parameters on the cutting machine: speed of movement of the workpiece, pressure of the waterjet, content of abrasive material, distance of a cutting nozzle from the workpiece, etc. As a result, the cut corresponds to the selected quality. Since the shape of the cut is directly monitored in the procedure of the invention, all problems and drawbacks of the devices described in prior art are done away with. The device of the invention can be used for cutting a material of an optional shape. Its surface at the cutting head no longer has any influence on the cutting procedure, the material may even be inhomogeneous and the workpiece may consist of various materials. Since self-regulation starts immediately in this procedure, even unique workpieces can be cut without any risk of scrap. When series cutting of workpieces fluctuating in dimensions and homogeneity of the material are in question, automatic cutting can be performed in optimum conditions in order to achieve selected speed and cut quality without undesired deviations that could cause scrap. A condition for economic optimisation of the device for abrasive waterjet cutting on a large scale is herewith met.

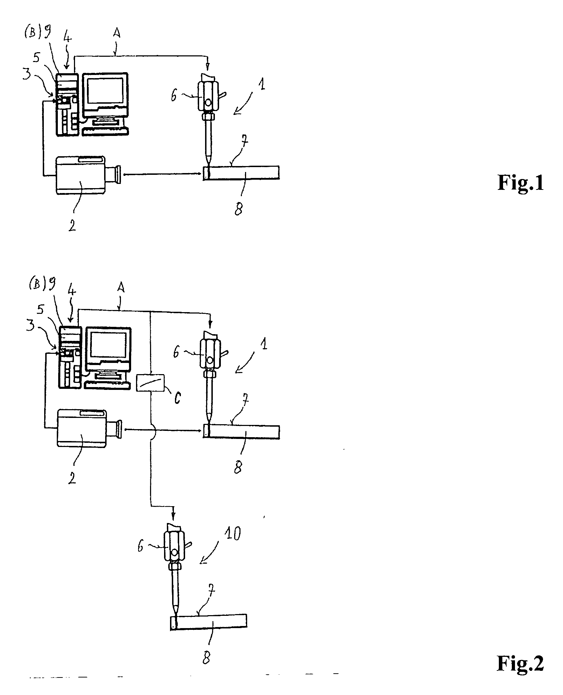

The characteristics of the invention will now be explained in more detail by way of a description of an embodiment and the enclosed drawings, representing in
- Fig. 1: a schematic view of the arrangement of devices of the invention,
- Fig. 2: a schematic view of the procedure of the invention,
- Fig. 3: a schematic view of a flat surface of a workpiece,
- Fig. 4: a chart of efficiency index for two variables, e.g.: advancement speed and cut roughness,
- *Fig. 5*: *a schematic view of the application in the device for simultaneous cutting control with an abrasive waterjet according to the first embodiment; and*
- *Fig. 6*: *a schematic view of the application in the device for simultaneous cutting control with an abrasive waterjet according to the second embodiment.*

An arrangement of devices for determining an efficiency index in abrasive waterjet cutting, i.e. the index unambiguously defining for a certain material the shape of a cut, roughness of surfaces created by cutting, their conical nature depending on the incidence angle of the abrasive waterjet consists of a known abrasive waterjet cutting machine **1,** further of a thermographic camera **2** and a computer **3.** A workpiece **4** is arranged on said machine **1,** said workpiece being intended to undergo a cutting procedure. Control of the machine **1** for cutting a certain shape is performed in a known way and is normally a constituent part of said machine **1.** It is important for the present invention that fixed and variable process parameters **A** of cutting are known: hydraulic, cutting, mixing, abrasive and input parameters of a workpiece. The arrangement is **characterised in that** said thermographic camera **2** is positioned in a way to record in front view a front surface **5** of a cut in the workpiece **4** in a known time interval (number of images per time unit).

An adequate programme within said computer **3** allocates to each thermographic image **6** cutting parameters **A** that were valid for each point **B** of cutting. Monitoring of cutting can help define an unambiguous link between the current highest temperature detected by said thermographic camera **2** and each cutting point **B** that is shaped like a step. Monitoring further shows that the shape of the front surface **5** of the cut in said workpiece **4** is curved in side view. A square function is the most appropriate as the best approximation in a mathematical notation of this curvature, or in a slower cutting even a linear approximation is appropriate. Inventor's observations and findings of cutting on which the above allegations are based, are not subject of the present invention, but originating points therefor. The regularity of said originating points is confirmed by tests performed by the arrangement of devices of the invention and the procedure of the invention performed by the inventor.

By monitoring the shape of a cut and by evaluating the profile of its surface that can be described by roughness and corrugation and dimensional precision typical values can be determined for such monitored type of cutting and for each individual material and for known process parameters **A** therefor as measured and recorded in said computer **3.** The final result is a table or chart of a relationship between the efficiency index and one of the parameters **A,** preferably the one, which is the most adequate piece of data for each setting of the abrasive waterjet cutting machine, preferably the speed of cutting. The technical problem set hereinbefore is herewith solved, which was the goal of the invention.

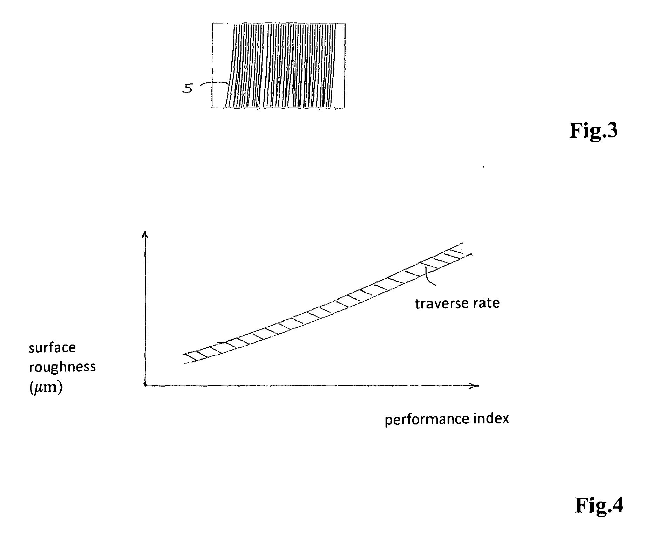

The table or chart so prepared is then available to each user of any material in an optional known way. The user uses the table or chart to set the cutting machine, with which the anticipated quality and economical nature of cutting are achieved, if proper setting is applied. Fig. 3 shows a schematic view of a cutting flat surface of a workpiece, wherein the abscissa (x) represents the distance of each cutting point from the starting point of cutting, the ordinate (y) represents the thickness of the workpiece. Fig. 4 represents the final result in the form of a chart, where the abscissa (x) represents the efficiency index in cutting and the ordinate (y) represents the roughness of the cutting surface, whereas the curve (z) shows the speed of advancement of the workpiece with other parameters **A** being constant.

The procedure of determining the efficiency index has the following characteristics: prior to industrial application of any material on a sample workpiece **4,** cutting **10** is performed on the arrangement of devices described above. Charts **11** or tables are then prepared and offered to users of the treated material, who use the data from said tables or charts to set their abrasive waterjet cutting device **12.**

Said tests can therefore be carried out in optional adequate institutions in one place only once for one type of material. Data are distributed in an optional way, either in paper form or electronically via the Internet bearing in mind the principle whether these information are payable or already included in the price of the material.

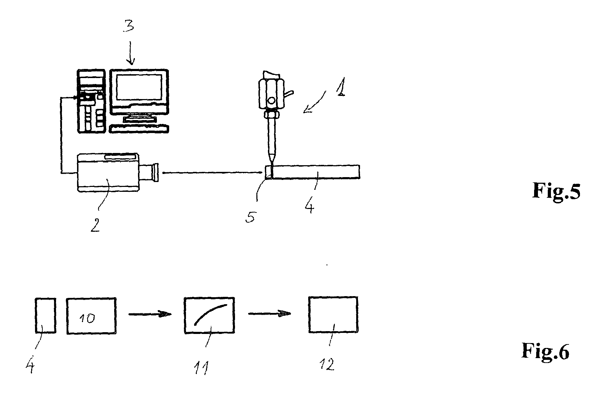

The present invention can also be applied directly on an abrasive waterjet treating machine. Two embodiments are hereinafter represented and shown in Fig. 5 and Fig. 6, wherein the following reference numbers refer to said figures.

A device for the control of the abrasive waterjet cutting device 1 consists of a thermal camera 2, oriented towards the cut in a way to detect it in front view. A microprocessor 3 receives the images from said camera 1 and each image is evaluated separately, which will be explained in more detail later. A computer 4 that comprises said microprocessor 3 contains a library 5 of data needed for the creation of control signals for a continuous changing of parameters A of cutting: speed of advancement of a workpiece, waterjet pressure, content of abrasive material in the waterjet, distance of a cutting head 6 from a surface 7 of a workpiece 8 etc. The computer 4 further includes a library 9 of data B on the shapes of a cut with belonging properties, especially precision and roughness of cutting.

Since the number of images per time unit in said thermal camera 2 is harmonised with the stroke of operation of said microprocessor and with the speed of changing of said cutting parameters A, it is achieved that in real time said microprocessor 3 changes the parameters A in a way that the cut always remains within the limit of a selected shape of the cut B.

The second embodiment intended for abrasive waterjet cutting devices for large-series workpieces foresees that test cutting for each known material at various parameters A is performed only at one location on sample workpieces 8 with said device 1 of the invention in order to decrease the costs of purchase and to check the existing devices, which are not yet adapted to such control. A curve is obtained for each selected parameter, which defines the cutting quality at various values of a selected parameter.

Such measurements may be performed by selected institutions or by the manufacturer of a material, who can then offer these charts C or adequate tables to the buyers of the material intended to be cut by the method of abrasive waterjet cutting. The operator of the device 10 for cutting - without the device of the invention - sets parameters B on his device 10 based on these charts C or table and immediately obtains the desired cut. Tables or charts C may be provided digitally and the user may enter them into a computer of the cutting device, if the latter is so advanced. These data can be obtained on the basis of tests or even the manufacturer of these devices may provide them to the owners. The purchase costs of an abrasive waterjet cutting device intended for large-series cutting are therewith decreased.

It is understandable that a man skilled in the art may construct other embodiments based on the above disclosure, without circumventing the essence of the invention defined in the appended claims.

## Claims

1. An arrangement of devices for determining an efficiency index in abrasive waterjet cutting, i.e. the index unambiguously defining for a certain material the shape of a cut, roughness of surfaces created by cutting, their conical nature depending on the incidence angle of the abrasive waterjet, wherein said arrangement consists of a known abrasive waterjet cutting machine **(1),** a thermographic camera **(2)** and a computer **(3),** wherein a workpiece **(4)** is arranged on said machine **(1),** said workpiece being intended to undergo a cutting procedure; and fixed and variable process parameters **(A)** of cutting are known: hydraulic, cutting, mixing, abrasive and input parameters of said workpiece, **characterised in that** said thermographic camera **(2)** is positioned in a way to record in front view the entire front surface **(5)** of a cut in the workpiece **(4)** in a known time interval, **in that** an adequate programme within said computer **(3)** allocates to each thermographic image **(6)** cutting parameters **(A)** that were valid for each point **(B)** of cutting and finally shows them in the form of a table or chart of a relationship between the efficiency index and one of the parameters **(A).**

2. Arrangement as claimed in Claim 1, **characterised in that** the most adequate parameter **(A)** for a link to the efficiency index is the speed of cutting.

3. Method for empirical determination of an efficiency index in abrasive waterjet cutting by use of the arrangement as claimed in Claims 1 and 2, **characterised in that** prior to industrial application of any material on its sample, cutting is performed on the arrangement of devices described above, charts or tables are then prepared and offered to users of the treated material, who use the data from said tables or charts to set their abrasive waterjet cutting device.

4. A device for the control of the abrasive waterjet cutting device **(1), characterised in that** it consists of a thermal camera **(2),** oriented towards the cut in a way to detect it in front view, of a microprocessor **(3)** receiving the images from said camera **(1),** wherein said camera evaluates each image separately based on the data from a library **(5)** of data, which are needed for the creation of control signals for a continuous changing of parameters **(A)** of cutting: speed of advancement of a workpiece, waterjet pressure, content of abrasive material in the waterjet, distance of a cutting head **(6)** from a surface **(7)** of a workpiece **(8)** etc., further of a library **(9)** of data **(B)** on the shapes of a cut with belonging properties, especially precision and roughness of cutting and then generates control signals for the control of said device (1).

5. Device as claimed in Claim 1, **characterised in that** it may be joined to a device **(1)** and separated from said device **(10)** for cutting in industry, wherein the data **(A)** obtained by the device of the invention are transferred to the device **(10)** in a digital or written form, so that an operator of said device **(10)** can use the data **(A)** as the process advances based on the current need.
